# EUROPÄISCHE PATENTSCHRIFT

(11) **EP 0 584 657 B1**
(45) Veröffentlichungstag und Bekanntmachung des Hinweises auf die Patenterteilung: **03.06.1998**
(21) Anmeldenummer: 93112898.7
(22) Anmeldetag: 11.08.1993
(51) Int. Cl.: G06K 19/073, G05B 19/418, G06F 1/00

(54) **Verfahren und Vorrichtung zur Datensicherung in mobilen beschreib- und lesbaren Datenträgern**
Method and apparatus to protect data within mobile read/write data carriers
Méthode et dispositif de protection de données dans un support d'information mobile

(30) Priorität: 24.08.1992 DE 4228083
(43) Veröffentlichungstag der Anmeldung: 02.03.1994
(73) Patentinhaber: SIEMENS AKTIENGESELLSCHAFT, 80333 München (DE)
(72) Erfinder: Janus, Kurt, Dipl.-Ing. (FH), D-90547 Stein (DE)

(56) Entgegenhaltungen:
- EP-A- 0 230 069
- EP-A- 0 282 926
- US-A- 4 776 464

## Beschreibung

Zur Identifizierung und Bearbeitung von beliebigen Gegenständen, beispielsweise von Werkstücken oder Teilprodukten in Produktionslinien, wird dem jeweiligen Gegenstand ein sogenannter mobiler Datenträger zugeordnet. Dieser mobile Datenträger verfügt unter anderem über eine Speichervorrichtung in der alle den Gegenstand betreffenden produktionsrelevanten Daten hinterlegt sind oder nach Abschluß bestimmter Bearbeitungsvorgänge neu hinterlegt werden. Die Änderung oder Abfrage der Daten im Speicher des mobilen Datenträgers erfolgt mittels drahtloser Übertragungstechnik durch Schreib-Lese-Geräte, die an den verschiedensten Stellen einer Produktionslinie vorgesehen sein können.

Aus der EP-A-0 282 926 ist ein Verfahren zur Sicherung von Daten bei mobilen Datenträgern bekannt. Der mobile Datenträger hat einen Hauptspeicher, dem zwei Zwischenspeicher vorgelagert sind. Die alten Daten aus dem Hauptspeicher werden in einem der Zwischenspeicher abgelegt und sind dort noch abrufbar falls beim Schreiben von neuen Daten in den Hauptspeicher ein Fehler gemacht wird.

Wenn durch defekte Speicherbausteine (RAM oder EEPROM) oder durch äußere Einflüsse, wie zu hohe Temperaturen, diese Daten verloren gehen, kann es zum Produktionsstillstand kommen. Dieser muß dann durch eine Notstrategie möglichst schnell behoben werden. Bisher wurde dieses Problem durch Handeingabe über Terminals gelöst. Diese Lösung ist jedoch aufwendig und zeitintensiv.

Aufgabe der Erfindung ist es, ein automatisiertes Verfahren zur Datensicherung von beschreib- und lesbaren Datenträgern sowie einen dafür geeigneten Datenträger zu schaffen.

Diese Aufgabe wird durch ein Verfahren gelöst, bei dem jedem Datenträger eine festcodierte Kennung zugeordnet wird und bei Gefahr eines Datenverlust diese Kennung zusammen mit den Daten des Datenträgers von einer Lesevorrichtung gelesen werden, wobei nach der Gefahr des Datenverlusts die vorher gelesenen Daten von einer Schreibvorrichtung in den Datenträger mit der entsprechenden Kennung geschrieben werden.

Bei einer vorteilhaften, zeitsparenden Ausbildung der Erfindung werden nach der Gefahr des Datenverlust die Daten des Datenträgers mit den zuvor gelesenen überprüft und nur die fehlerhaften Daten neu überschrieben.

Falls selbst die festcodierte Information verloren gehen sollte, ist es vorteilhaft, wenn auf dem Datenträger eine optisch lesbare Kennung aufgebracht ist, die dann zusammen mit den Daten des Datenträgers von der Schreib-Lese-Vorrichtung gelesen werden kann.

Ein zur Durchführung des Verfahrens geeigneter Datenträger verfügt über einen Schreib-Lese-Speicher und mindestens einem festcodierbaren Informationsbereich der beispielsweise als Widerstandsmatrix oder als Diodenmatrix ausgebildet sein kann.

Der Datenträger kann aber auch anstatt des festcodierbaren Informationsbereichs mit einer optisch lesbar aufgebrachten Kennung versehen sein. Zur Erhöhung der Datensicherheit ist eine Kombination aus einem festcodierbaren Informationsbereich und einer optisch lesbaren Kennung vorteilhaft.

Eine Ausbildung der Erfindung wird im folgenden anhand einer Zeichnung näher erläutert. Dabei zeigen:
FIG 1 ein Identifikationssystem,
FIG 2 eine Anordnung zur Ausführung des Verfahrens.

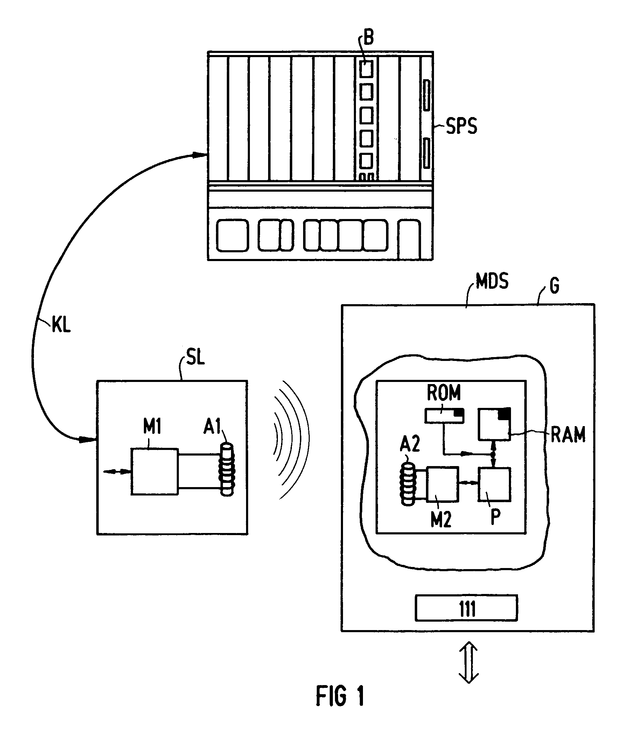

FIG 1 zeigt ein Automatisierungsgerät SPS, wie es beispielsweise bei speicherprogrammierbaren Steuerungen verwendet wird. Das Automatisierungsgerät SPS ist über ein Kabel KL mit einer Schreib-Lese-Vorrichtung SL verbunden. Neben der Schreib-Lese-Vorrichtung SL ist ein mobiler Datenträger MDS dargestellt, der beispielsweise einer Autokarosserie auf dem Weg durch die Montagelinie fest zugeordnet ist. Der mobile Datenträgen MDS könnte aber auch, einem nicht gezeigten Werkstück zugeordnet oder an einer Palette angebracht sein. Durch den Doppelpfeil unterhalb des mobilen Datenträgers ist angedeutet, daß dieser an verschiedenen Stellen der Montage- oder Produktionslinie an einer Schreib-Lese-Vorrichtung SL vorbeigeführt wird.

Das Automatisierungsgerät SPS verfügt unter anderem über eine Steuerbaugruppe B, die für den Informationsaustausch mit der Schreib-Lese-Vorrichtung SL zuständig ist. Die Schreib-Lese-Vorrichtung SL weist einen Modulator M1 und eine daran angeschlossene Sendeantenne Al auf. Der mobile Datenträger MDS verfügt über einen Modulator M2 und eine diesem zugeordnete Antenne A2. Der Modulator M2 sowie der Schreib-Lese-Speicher RAM ist an eine Steuereinheit P, die beispielsweise als ASIC ausgeführt sein kann, angeschlossen. Über die Steuereinheit P kann der Schreib-Lese-Speicher RAM beschrieben und gelesen werden; außerdem steuert sie die Sende- und Empfangsvorgänge über die Antenne A2.

Das Automatisierungsgerät SPS gibt die produktionsrelevanten Daten für den jeweiligen Gegenstand, beispielsweise für eine Autokarosserie, an die Schreib-Lese-Vorrichtung SL. Soll der Speicher RAM des mobilen Datenträgers MDS ganz oder teilweise neu beschrieben werden, so werden die entsprechenden Befehle und Daten vom Automatisierungsgerät SPS über den Modulator M1 und die Antenne A1 der Schreib-Lese-Vorrichtung SL an den mobilen Datenträger MDS gesendet. Dieser empfängt mit seiner Antenne A2 die Informationen und gibt sie über den Demodulator M2 und die interne Steuereinheit P an den Speicher RAM weiter.

Die elektronischen Bauteile des mobilen Datenträgers MDS sind in einem Gehäuse G untergebracht, wodurch sie von äußeren Einflüssen, wie Temperatur, Erschütterungen, Beschädigungen, etc., in gewissem Maße geschützt sind. Auf dem Gehäuse G ist im unteren Bereich eine optisch lesbare Nummer 111 fest eingeprägt.

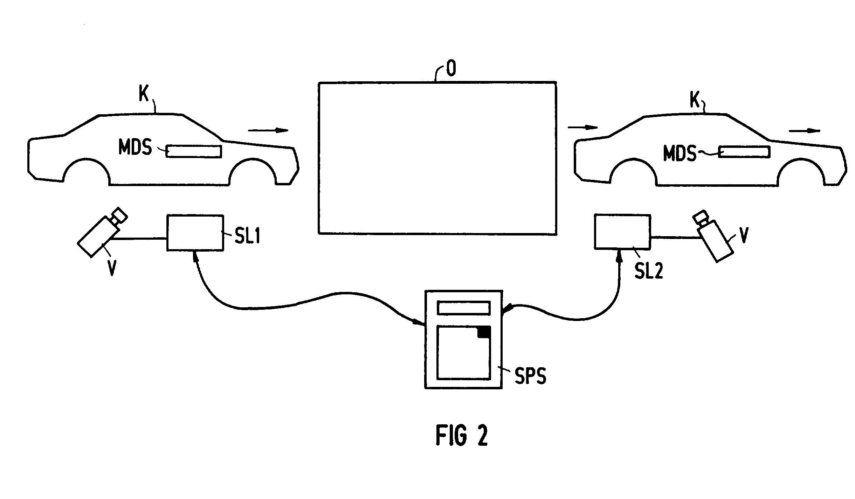

FIG 2 zeigt eine Vorrichtung zur Sicherungen der Informationen auf einem mobilen Datenträger MDS, der in einer Autokarosserie K untergebracht ist und diese während der gesamten Montage begleitet. In dem mobilen Datenträger MDS sind sämtliche Informationen über das entstehende Fahrzeug abgelegt, beispielsweise die Farbe, die Art der Motorisierung, die Reifengröße, Ausstattungsmerkmale, etc.. Die Karosserie K habe soeben die Lackiererei verlassen und soll den Trockenofen O passieren. Da der mobile Datenträger MDS im Trockenofen 0 über mehrere Stunden Temperaturen über 200° C ausgesetzt ist, wird sich im Innern seines Gehäuses G eine Temperatur einstellen, die höher als 120° C ist. Bei dieser Temperatur verliert jedoch der Speicherbaustein (der ein RAM oder auch ein EEPROM sein kann) im mobilen Datenträger MDS seinen Dateninhalt.

Zur Sicherung der Information ist am Eingang und am Ausgang des Trockenofens 0 ein erstes und zweites Schreib-Lese-Gerät SL1, SL2 vorgesehen, das mit einer zentralen Datenverarbeitungsanlage SPS verbunden ist. Wenn die Karaosserie K das erste Schreib-Lese-Gerät SL1 passiert, werden die Informationen aus dem Schreib-Lese-Speicher RAM des mobilen Datenträgers MDS und die festcodierte Information aus dem festcodierten Informationsbereich ROM gelesen und in der Datenverarbeitungsanlage SPS abgelegt. Wenn das Fahrzeug den Trockenofen 0 verläßt, wird über das zweite Schreib-Lese-Gerät SL2 wieder die Information aus dem mobilen Datenspeicher gelesen und mit den Informationen, die sich in der Datenverarbeitungsanlage SPS befinden, verglichen. Stellen sich dabei einige oder alle Informationen als fehlerhaft heraus, so können die fehlerhaften oder alle Informationen über das Schreib-Lese-Gerät SL2 wieder in den mobilen Datenspeicher MDS eingeschrieben werden. Jedenfalls ist durch die festcodierte Information im mobilen Datenträger MDS sichergestellt, daß die zuvor in der Datenverarbeitungsanlage SPS gespeicherten Informationen dem richtigen mobilen Datenträger MDS zugeordnet werden, da die festcodierte Information auch durch die hohen Temperaturen im Trockenofen 0 nicht verloren geht.

Bei einer anderen Ausführungsvariante kann darauf verzichtet werden zunächst die Daten aus dem mobilen Datenträger MDS nach Verlassen des Trockenbereichs 0 zu lesen. Es kann vielmehr sofort ein Schreibvorgang eingeleitet werden der die alten Informationen im mobilen Datenträger, unabhängig davon ob diese noch stimmen oder bereits verfälscht worden sind, mit den zuvor gelesenen Informationen überschreibt.

Anstelle der festcodierten Information im mobilen Datenträger MDS oder als zusätzliches Sicherheitskriterium, kann auf dem Gehäuse G auch die aus FIG 1 bekannte optische Kennung 111 aufgebracht sein. Diese Kennung könnte dann von einem optischen Lesegerät beispielsweise einer Videokammera V gelesen und anschließend identifiziert werden. Als optische Kennung könnte aber auch ein Strichcode (Barcode) verwendet werden, der dann von einem Strichcodeleser gelesen werden könnte.

## Patentansprüche

1. Verfahren zur Datensicherung von beschreib- und lesbaren Datenträgern, insbesondere von mobilen Datenträgern (MDS), wobei
1.1 jedem Datenträger (MDS) eine festcodierte Kennung zugeordnet wird,
1.2 bei Gefahr eines Datenverlusts die Kennung zusammen mit den Daten des Datenträgers (MDS) von einer Lese-Vorrichtung (SL1) gelesen werden,
1.3 nach der Gefahr des Datenverlusts die vorher gelesenen Daten von einer Schreibvorrichtung (SL2) in den Datenträger (MDS) mit der entsprechenden Kennung geschrieben werden.

2. Verfahren nach Anspruch 1, wobei nach der Gefahr des Datenverlusts die Daten des Datenträgers (MDS) mit den vorher zuvor gelesenen überprüft werden und nur die fehlerhaften Daten neu überschrieben werden.

3. Verfahren nach einem der vorstehenden Ansprüche, wobei auf dem Datenträger (MDS) eine optisch lesbare Kennung (111) vorgesehen ist, die von Schreib-Lese-Vorrichtungen (SL1,SL2) identifizierbar ist.

## Claims

1. Method for protecting data of writable and readable data carriers, in particular mobile data carriers (MDS), wherein
1.1 a permanently coded identifier is associated with each data carrier (MDS),
1.2 in the event of danger of a loss of data the identifier together with the data of the data carrier (MDS) is read by a reading device (SL1),
1.3 after the danger of the loss of data the previously read data is written by a writing device (SL2) into the data carrier (MDS) with the corresponding identifier.

2. Method according to claim 1, wherein after the danger of the loss of data the data of the data carrier (MDS) is checked with the data previously read before and only the erroneous data is overwritten anew.

3. Method according to one of the preceding claims, wherein provided on the data carrier (MDS) there is a visually readable identifier (111) which can be identified by read/write devices (SL1, SL2).

## Revendications

1. Procédé de sauvegarde de données de supports de données pouvant être lus et écrits, notamment de supports de données mobiles (MDS), dans lequel
1.1 on associe à chaque support de données (MDS) un identificateur codé permanent,
1.2 lors d'un risque de perte de données, on lit au moyen d'un dispositif de lecture (SL1) l'identificateur en même temps que les données du support de données (MDS),
1.3 une fois le risque de perte de données passé, on écrit au moyen d'un dispositif d'écriture (SL2) les données, lues auparavant, dans le support de données mobile (MDS) ayant l'identificateur correspondant.

2. Procédé selon la revendication 1, dans lequel, une fois le risque de perte de données passé, on contrôle les données du support de données (MDS) en les comparant aux données lues auparavant et on réécrit seulement les données erronées.

3. Procédé selon l'une des revendications précédentes, dans lequel on prévoit sur le support de données (MDS) un identificateur (111), susceptible d'être lu par des moyens optiques, qui peut être identifié par des dispositifs d'écriture et de lecture (SL1, SL2).
